# EUROPÄISCHE PATENTSCHRIFT

(11) **EP 1 737 608 B1**
(45) Veröffentlichungstag und Bekanntmachung des Hinweises auf die Patenterteilung: **05.11.2008**
(21) Anmeldenummer: 05715467.6
(22) Anmeldetag: 23.02.2005
(51) Int. Cl.: B23K 26/32, B23K 9/23, F01N 7/10, F01N 7/18

(54) **VERFAHREN ZUM PULS-SCHWEISSEN EINES BLECHBAUTEILS WIE EIN ROHR MIT EINEM GUSSMETALLBAUTEIL WIE EINE ÖFFNUNG EINES GEHÄUSES FÜR ABGASANLAGE**
METHOD FOR PULSE WELDING A SHEET METAL PART SUCH AS A PIPE TO A CAST METAL PART SUCH AS A HOUSING PORT FOR AN EXHAUST SYSTEM
PROCEDE DE SOUDAGE PAR IMPULSIONS D'UN ELEMENT EN TOLE TEL QU'UN TUBE AVEC UN ELEMENT EN METAL COULE TEL QU'UNE OUVERTURE DE BOITIER POUR UN SYSTEME D'ECHAPPEMENT

(30) Priorität: 25.02.2004 DE 102004009109
(43) Veröffentlichungstag der Anmeldung: 03.01.2007
(73) Patentinhaber: Daimler AG, 70327 Stuttgart (DE); BorgWarner Turbo Systems GmbH, 67292 Kirchheimbolanden (DE)
(72) Erfinder: BIEN, Wilfried, 21218 Seevetal-Emmelndorf (DE); ELFELDT, Jan, Peter, 20144 Hamburg (DE); HALVES, Michael, 22765 Hamburg (DE); HÜLSBERG, Thomas, 21244 Buchholz (DE); KLUSSMANN, Uwe, 29646 Bispingen (DE); KUZI, Hildwin, 69214 Eppelheim (DE); NUHN, Holger, 29640 Schneverdingen (DE); PÜNJER, Ralf, 21217 Seevetal/Flesstedt (DE); REINHARDT, Olav, 22607 Hamburg (DE); RIEWERT, Dirk, 22589 Hamburg (DE); RIGGERS, Alfred, 27419 Freetz-Lengenbostel (DE); STERNAL, Thorsten, 21647 Moisburg (DE)
(74) Vertreter: Balsters, Robert
(86) Internationale Anmeldenummer: PCT/EP2005/001873
(87) Internationale Veröffentlichungsnummer: WO 2005/080045

(56) Entgegenhaltungen:
- EP-A- 0 761 939
- EP-A- 0 921 052
- EP-A- 0 939 208
- DE-A1- 10 022 052
- DE-A1- 19 808 383
- DE-C1- 19 721 092
- US-A- 5 268 555
- PATENT ABSTRACTS OF JAPAN Bd. 1999, Nr. 03, 31. März 1999 (1999-03-31) -& JP 10 314948 A (TOYOTA MOTOR CORP), 2. Dezember 1998 (1998-12-02)

## Beschreibung

Die Erfindung betrifft ein Verfahren zum Verbinden eines Abgaskrümmers mit einer Öffnung eines Gehäuses eines Abgasaggregats und eine Verbindung von einem Abgaskrümmer und mit einem Abgasaggregat mit einem eine Öffnung aufweisenden Gehäuse (siehe, z.B., EP-A-0 939 208).

Verbindungen zwischen Rohren aus Blech und bspw. Gehäuseöffnungen aus gusseisernem Material werden üblicherweise durch Flansche inklusive Dichtung bereitgestellt. Nur so ist es möglich, einen leckagefreien Transport bspw. heißer Gase zwischen dem Rohr und der Gehäuseöffnung zu gewährleisten.

In Abgasanlagen von Kraftfahrzeugen ist gemäß bisherigen Konzepten vorgesehen, einen Blechkrümmer und ein gusseisernes Turbinengehäuse eines Abgasturboladers durch eine geschraubte Flanschverbindung miteinander zu verbinden. Eine Alternative hierfür ist der so genannte Integralkrümmer, bei dem ein Abgaskrümmer und das Turbinengehäuse aus einem Stück gegossen sind.

Aus der Druckschrift DE 198 19 946 A1 ist bekannt, ein Gasumlenkelement für einen Abgaskrümmer gasdicht mit einem motorseitigen Flansch zu verschweißen. Dieser Flansch ist in diesem Fall wiederum mit dem Motor zu verschrauben. Durch diese Maßnahme wird jedoch keine direkte Verbindung zwischen dem Abgaskrümmer und dem Motor oder bedarfsweise einem Turbolader realisiert.

In der Druckschrift DE 100 22 052 C2 wird offenbart, einen Einlasstrichter eines Turbinengehäuses mittels einer Schweißnaht direkt an einem Krümmer anzubinden. Ein Verschweißen dieser beiden Komponenten innerhalb einer Abgasanlage ist in diesem Fall nur deshalb möglich, weil der Einlasstrichter wie der Krümmer aus Blech gefertigt ist.

Hintergrund der vorliegenden Erfindung ist, eine direkte Verbindung zwischen einem Rohr aus Blech und einem Gehäuse aus Gussmetall zu realisieren.

Hierzu wird ein Verfahren mit den Merkmalen des Patentanspruchs 1, eine Verbindung mit den Merkmalen des Patentanspruchs 8.

Bei dem erfindungsgemäßen Verfahren zum Verbinden eines Blechbauteils mit einem Bauteil aus Gussmetall werden das Blechbauteil und das Bauteil durch ein gepulstes Schweißverfahren miteinander verschweißt.

Mit der Erfindung wird die Schwierigkeit überwunden, Gussmetall mit Blech zu verschweißen. Gründe für diese Schwierigkeit sind unterschiedliche Schmelzeigenschaften, die temperaturabhängig sind, unterschiedliche Fließeigenschaften und unterschiedliche Gefüge dieser beiden metallischen Materialien.

In bevorzugter Ausgestaltung des erfindungsgemäßen Verfahrens ist vorgesehen, ein Rohr mit einer Öffnung eines Gehäuses zu verbinden, wobei das Rohr aus mindestens einem Blechbauteil und zumindest die Öffnung des Gehäuses aus Gussmetall gefertigt ist. Die Öffnung und das mindestens eine Blechbauteil werden durch ein gepulstes Schweißverfahren und/oder mit einer gepulsten Schweißstromquelle verschweißt.

Somit ist es möglich, eine direkte, stabile und gasdichte Verbindung zwischen zwei Vorrichtungen aus unterschiedlichen metallischen Materialien, in diesem Fall Blech und Gussmetall, zu realisieren. In diesem Anwendungsfall sind üblicherweise auftretende Unterschiede bezüglich Wandstärken des mit der Öffnung des Gehäuses zu verschweißenden Rohrs problematisch. Durch dicke Wandstärken wird viel Wärme aus einer beim Schweißen entstehenden Schmelze abgezogen, wodurch wiederum Risse an der Schweißnaht und den Wärmeeinflusszonen entstehen. Derartige Schwierigkeiten werden mit dem erfindungsgemäßen Verfahren überwunden.

Durch die erfindungsgemäße Maßnahme, beim Verschweißen eine gepulste Schweißstromquelle zu verwenden, wird in die Schweißnaht nur relativ wenig Wärme eingebracht. Es ist nunmehr möglich, das mindestens ein Blechbauteil des Rohrs mit der Öffnung des Gehäuses aus Gussmetall homogen und rissfrei zu verschweißen. Eine durch die gepulste Schweißstromquelle eingebrachte thermische Energiedichte wirkt entlang der Schweißnaht nur kurzzeitig auf die Fügepartner.

Die durch das erfindungsgemäße Verfahren bereitgestellte Verbindung gewährleistet bspw. einen leckagefreien Transport heißer Gase, wie bspw. von Abgasen, zwischen dem Rohr und dem Gehäuse.

Bei herkömmlichen Schweißverfahren ist die Schweißnaht bspw. einer Verzunderung, einer Abrasion oder hohen thermischen Belastungen eines durch das Schweißen teilweise umgewandelten Gefüges ausgesetzt, wenn diese Schweißnaht direkt in einem heißen Gasstrom liegt. Hier besteht die Gefahr, dass sich die Schweißnaht löst.

Bei Durchführung des erfindungsgemäßen Verfahrens kann ein Laserschweißverfahren, ein WIG-Schweißverfahren (Wolfram-Inert-Gas), oder ein MAG-Schweißverfahren (Metall-Aktiv-Gas) angewandt werden. Mit dem Laserschweißverfahren ist es möglich, die Schweißnaht zwischen dem Rohr und der Öffnung des Gehäuses durch extrem kurzzeitige Pulse zu beaufschlagen und somit präzise zu erhitzen. Bei dem WIG-Schweißverfahren brennt zwischen einem Werkstück und einer nicht abschmelzbaren Wolframelektrode ein Lichtbogen. Bei dem MAG-Schweißverfahren handelt es sich um ein besonders flexibles Lichtbogenschweißverfahren, da es sich zum Schweißen innerhalb eines Bereichs großer Blechdicken von 0,5 mm an aufwärts eignet. Bei dem MAG-Schweißverfahren können schmelzende Zusatzwerkstoffe zum Einsatz kommen, um die Schweißnaht zu erzeugen.

In Ausgestaltung kann vorgesehen sein, dass zumindest zu verschweißende Bereiche des mindestens einen Blechbauteils und der Öffnung des Gehäuses vor dem Verschweißen auf eine geeignete Bearbeitungstemperatur temperiert werden. Durch diese zusätzliche Maßnahme ist es möglich, an den zu verschweißenden Bereichen des mindestens einen Blechbauteils und der Öffnung des Gehäuses, wo also die Schweißnaht entsteht, einem zu großen Temperaturgradienten entgegen zu wirken. Somit werden thermische Inhomogenitäten, die Risse verursachen, entlang der beim Verschweißen entstehenden Schweißnaht vermieden. In Abhängigkeit einer bestehenden Ausgangstemperatur sind diese Bereiche entweder vorzuwärmen oder abzukühlen. Im Rahmen eines groß angelegten Fertigungsprozesses besteht die Möglichkeit, zu verschweißende Komponenten unmittelbar nach einem vorhergehenden Fertigungsschritt, bei dem mindestens eine der Komponenten erhitzt wurde, zu schweißen. Dabei ist es möglich, die mindestens eine zu verschweißende Komponente innerhalb eines Glühofens auf die Bearbeitungstemperatur zu temperieren.

Andererseits kann eine gezielt Abkühlung mindestens einer der verschweißten Komponenten nach dem Verschweißen bei bestimmten Werkstoffkombinationen von Vorteil sein, um die Stabilität der Schweißnaht zu erhöhen.

Gemäß der Erfindung ist vorgesehen, ein doppelwandiges Rohr, das aus einem Innenrohr und einem Außenrohr, das aus dem mindestens einen Blechbauteil gefertigt ist, mit der Öffnung des Gehäuses zu verbinden, so ist gemäß bevorzugter Ausgestaltung des erfindungsgemäßen Verfahrens vorgesehen, das Innenrohr in die Öffnung des Gehäuses einzuführen, das Außenrohr evtl. auf die Öffnung aufzuschieben und die Öffnung mit dem mindestens einen Blechbauteil, aus dem das Außenrohr gefertigt ist, zu verschweißen. Bei der Erfindung ist demnach vorgesehen, dass das Gehäuse lediglich mit dem mindestens einen Blechbauteil des Außenrohrs mittels eines gepulsten Schweißverfahrens verschweißt wird. Zwischen dem Innenrohr und der Öffnung des Gehäuses wird somit ein Schiebesitz realisiert.

Gemäß der Erfindung ist vorgesehen, eine Verbindung von einem Abgaskrümmer mit einem Abgasaggregat mit einem eine Öffnung aufweisenden Gehäuse, wobei das Abgaskrümmer aus mindestens einem Blechbauteil und zumindest die Öffnung des Gehäuses aus Gussmetall gefertigt ist, bereitzustellen. Die erfindungsgemäße Verbindung ist derart ausgestaltet, dass die Öffnung und das mindestens eine Blechbauteil durch ein gepulstes Schweißverfahren miteinander verschweißt sind. Somit wird eine stabile, leckagefreie und direkte Verbindung zwischen dem Rohr und der Öffnung des Gehäuses, die aus unterschiedlichen metallischen Materialien ausgebildet sind, realisiert.

Auf Flansche, die bislang zur Bereitstellung einer Verbindung zwischen gasführenden Teilen aus Blech und Gussmetall nötig sind, kann erfindungsgemäß verzichtet werden. Somit kann zur Bereitstellung der Verbindung sowohl Material, Gewicht als auch Bauraum eingespart werden. Selbst wenn die erfindungsgemäße Verbindung hohen Temperaturen, bspw. erzeugt durch Abgasströme, ausgesetzt ist, besteht keine Gefahr einer Rissbildung.

Mit der Erfindung ist es möglich, Abgase mit einer Temperatur von bis zu 1050 °C leckagefrei zwischen dem luftspaltisolierten Abgaskrümmer und dem Turbolader zu transportieren. Zur Bereitstellung dieser Verbindung ist eine Außenwandung des Zugaskanals entsprechend einer Innenwandung des Außenrohrs bspw. zylindrisch ausgebildet.

In bevorzugter Ausgestaltung der erfindungsgemäßen Abgasanlage ist der Abgaskrümmer als luftspaltisolierter Abgaskrümmer und das Abgasaggregat als Turbolader ausgebildet. Durch die erfindungsgemäß realisierbare Vermeidung einer Flanschverbindung zwischen dem luftspaltisolierten Abgaskrümmer und dem Turbolader wird eine Leckage innerhalb der Abgasanlage vermieden, so dass Abgasvorschriften zuverlässig eingehalten werden.

Durch die Maßnahme, zwischen dem Innenrohr des luftspaltisolierten Abgaskrümmers und dem Zugaskanal des Turboladers einen Schiebesitz bereitzustellen, ist es möglich hohe Abgastemperaturen von bis zu 1050 °C einzuleiten. Aufgrund dieser luftspaltisolierten Ausbildung des Abgaskrümmers werden Spannungen an einer Schweißnaht zwischen dem Abgaskrümmer und dem Turbolader vermieden. Erfindungsgemäß liegt die Schweißnaht nicht direkt am Gasstrom, so dass diese bei Betrieb der Abgasanlage, im Vergleich zu den hohen Temperaturen der Abgase, geringen Temperaturen ausgesetzt ist. Somit ist es wiederum möglich, die Verbindung geometrisch günstiger auszulegen, so dass weitaus geringere Wandstärken erforderlich sind.

Eine Wärmeausdehnung des bei Betrieb der Abgasanlage stark erhitzten Innenrohrs bzw. Gasführungsrohrs des luftspaltisolierten Abgaskrümmers wird aufgrund des Schiebesitzes zwischen dem Gasführungsrohr und dem Turbolader in einfacher Weise kompensiert. Das Gasführungsrohr kann sich dabei in den Turbolader hinein ausdehnen, ohne dass dabei Kräfte übertragen werden, es ist also eine freie Dehnung des Gasführungs- bzw. Innenrohrs relativ zu dem Zugaskanal des Turboladers möglich.

Üblicherweise unterscheiden sich Wandstärken des Außenrohrs des luftspaltisolierten Abgaskrümmers (ca. 2 mm) und der Wandung des Zugaskanals des Turboladers (ca. 4 mm) deutlich voneinander. Durch die Maßnahme, eine gepulste Schweißstromquelle zum Verbinden dieser beiden Komponenten zu benutzen, wird die bei herkömmlichen Schweißverfahren auftretende und im Unterschied der Wandstärken und der Unterschiedlichkeit der Materialien begründete Schwierigkeit, eine stabile und/oder gasdichte Schweißnaht bereitzustellen. überwunden.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung ausführlich beschrieben.

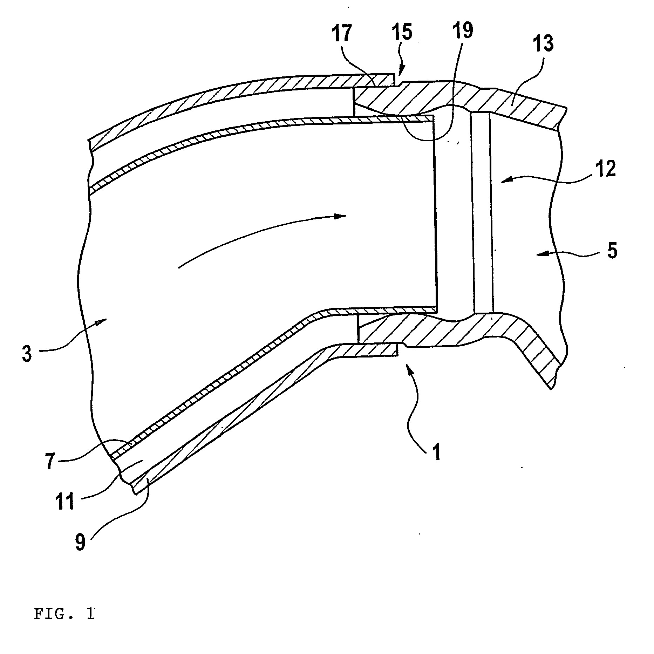

- Fig. 1: zeigt eine Ausführungsform einer erfindungsgemäßen Anordnung in schematischer Darstellung.

Fig. 1 zeigt eine Verbindung 1 zwischen einem Rohr eines Abgaskrümmers 3 mit einer Öffnung 12 eines Gehäuses 13 eines Abgasaggregats, insbesondere eines Turboladers 5. Es ist vorgesehen, dass der Abgaskrümmer 3 ein Innenrohr 7 und ein Außenrohr 9 aufweist, wobei zumindest das Außenrohr 9 aus zumindest einem Blechteil gefertigt ist. Außerdem ist zwischen dem Innenrohr 7 und dem Außenrohr 9 ein Luftspalt 11 vorhanden. Demnach ist im vorliegenden Fall der Abgaskrümmer 3 als luftspaltisolierter Abgaskrümmer 3 ausgebildet. Das Gehäuse 13 des Turboladers 5 ist aus Gussmetall gefertigt.

Zur erfindungsgemäßen Bereitstellung der erfindungsgemäßen Verbindung 1 zwischen dem Abgaskrümmer 3 und dem Turbolader 5 ist vorgesehen, dass im Bereich einer Öffnung 12 des Gehäuses 13, also dem Zugaskanal des Turboladers 5 an einer Außenwandung eine zylindrische Anformung 15 angeformt ist.

Bei einem Zusammensetzen des doppelwandigen Abgaskrümmers 3 mit dem Gehäuse 13 des Turboladers 5 ist vorgesehen, dass zunächst das gasführende Innenrohr 7 in die Öffnung 12, also an einer Innenwandung des Gehäuses 13 des Turboladers 5 eingeführt wird. Das Außenrohr 9 des Abgaskrümmers 3 wird an der zylindrischen Anformung 15 am Zugaskanal 12 des Gehäuses 13 auf das Gehäuse 13 des Turboladers 5 aufgeschoben.

Anschließend ist vorgesehen, dass das Gehäuse 13 des Turboladers 5 entlang der zylindrischen Anformung 15 nur mit dem Außenrohr 9 des luftspaltisolierten Abgaskrümmers 3 durch ein gepulstes Schweißverfahren mit einer gepulsten Schweißstromquelle verschweißt wird.

Durch Anwendung des gepulsten Schweißverfahrens wird pro Schweißpuls kurzzeitig geringe Wärmeenergie in eine Schweißstelle 17 zwischen dem Gehäuse 13 und dem Außenrohr 9 eingebracht. Als geeignetes gepulstes Schweißverfahren kann hierbei ein Laserschweißverfahren oder WIG-Schweißverfahren oder ein MAG-Schweißverfahren zu Anwendung kommen.

Aufgrund dieser erfindungsgemäßen Vorgehensweise ist es möglich, zwischen einem Blechteil wie dem Außenrohr 9 des Abgaskrümmers 3 und einem Bauteil aus Gussmetall, wie dem Gehäuse 13 des Turboladers 5, die erfindungsgemäße Verbindung 1 derart zu realisieren, daß diese mechanisch stabil und/oder gasdicht ausgebildet ist. Ein normales Schweißverfahren, bei dem im Vergleich zu der erfindungsgemäßen Vorgehensweise viel Wärmeenergie in die Schweißstelle 17 eingebracht wird, ist für diesen Zweck, wie nachstehend erläutert, nicht geeignet.

Die Schwierigkeit ein Bauteil aus Gussmetall mit einem Blechbauteil zu verschweißen, ist in den unterschiedlichen Schmelzeigenschaften dieser beiden metallischen Materialien begründet. Blech und Gussmetall unterscheiden sich durch unterschiedliche Schmelztemperaturen, unterschiedliche Fließeigenschaften sowie durch unterschiedliche strukturelle Gefüge. Dies erschwert es, zwischen diesen beiden metallischen Materialien mit herkömmlichen Schweißverfahren eine homogene, mechanisch stabile bzw. gasdichte Schweißverbindung zu realisieren. Außerdem kommen wie im vorliegenden Fall noch erhebliche Wandstärkenunterschiede zwischen dem Außenrohr 9 und dem Gehäuse 13 hinzu. Aufgrund der dickeren Wandstärke des Gehäuses 13 besteht bei herkömmlichen Schweißverfahren die Gefahr, dass viel Wärme aus der Schmelze abgezogen wird, was zu Rissbildungen führen kann.

Eine Wandung der Öffnung 12 des Gehäuses 13 des Turboladers 5 mündet erfindungsgemäß in den Luftspalt 11 zwischen dem Innenrohr 7 und dem Außenrohr 9 des luftspaltisolierten Abgaskrümmers 3. Dabei ist erfindungsgemäß berücksichtigt, dass zwischen einer Innenwandung der Öffnung 12 des Gehäuses 13 und dem Innenrohr 7 des luftspaltisolierten Abgaskrümmers 3 ein Schiebesitz 19 vorhanden ist.

Die erfindungsgemäße Verbindung 1 entspricht eine Abgasanlage eines Kraftfahrzeugs angeordnet. Der luftspaltisolierte Abgaskrümmer 3 ist mit Zylindern eines Verbrennungsmotors verbunden. Bei Betrieb des Verbrennungsmotors entstehende Abgase strömen dabei in Richtung des gebogenen Pfeils durch das gasführende Innenrohr 7 des luftspaltisolierten Abgaskrümmer 3 in Richtung des Turboladers 5. Hierbei auftretende, thermisch bedingte Ausdehnungen des gasführenden Innenrohrs 7 werden innerhalb der erfindungsgemäßen Verbindung 1 wegen des Schiebesitzes 19 zwischen den gasführenden Innenrohr 7 und der Innenwandung des Gehäuses 13 an der Öffnung 12 kompensiert. Bei dieser Anordnung ist es möglich, dass das gasführende Innenrohr 7 an dem Schiebesitz 19 relativ zu der Innenwandung des Gehäuses 13 zur Kompensation thermischer Ausdehnungen eine Verschiebung relativ zu dem Gehäuse 13 durchführen kann.

Aufgrund der luftspaltisolierten Ausführung des Abgaskrümmers 3 ist zudem gewährleistet, dass die Schweißstelle 17 an der Verbindung 1 zwischen dem Außenrohr 9 und dem Gehäuse 13 nicht direkt den strömenden Abgasen ausgesetzt ist. Somit ist die Schweißstelle 17 aufgrund der Luftspaltisolierung mit geringeren Temperaturen als den eigentlichen Temperaturen der Abgase beaufschlagt. Die Schweißstelle 17 ist somit verhältnismäßig geringfügigen Spannungen ausgesetzt. Die erfindungsgemäße Verbindung kann demnach bei geringen Wandstärken geometrisch günstig ausgelegt werden. Hierzu durchgeführte Versuche haben ergeben, dass aufgrund der erfindungsgemäßen Ausgestaltung der Verbindung 1 Abgase mit Temperaturen von bis zu 1050 °C von dem Abgaskrümmer 3 zu dem Turbolader 5 transportiert werden können.

Bislang ist es erforderlich, derartige Verbindungen insbesondere in Abgasanlagen zwischen zwei Komponenten, die aus unterschiedlichen metallischen Materialien, wie Blech im Falle des Abgaskrümmers 3 und Gussmetall im Falle des Gehäuses 13 des Turboladers 5, ausgebildet sind, über eine Flanschverbindung miteinander zu verbinden. Aufgrund der erfindungsgemäßen Herstellung sowie Ausgestaltung der Verbindung 1 kann auf einen derartigen Flansch nunmehr verzichtet werden.

Somit ist es möglich, Verbindungen in Abgasanlagen, wie die erfindungsgemäße Verbindung 1, optimal auszugestalten. Da kein Flansch mehr benötigt wird, ergeben sich somit eine Materialersparnis sowie eine Gewichtsreduzierung, zudem werden Platzprobleme gelöst.

## Patentansprüche

1. Verfahren zum Verbinden eines Abgaskrümmers (3) mit einer Öffnung (12) eines Gehäuses (13) eines Abgasaggregats (5), wobei der Abgaskrümmer ein Innenrohr (7) und ein Außenrohr (9), das aus mindestens einem Blechbauteil gefertigt ist, aufweist, und zumindest die Öffnung (12) des Abgasaggregats (5) aus Gussmetall gefertigt ist, und wobei das Innrohr (7) in die Öffnung (12) des Gehäuses (13) des Abgasaggregats (5) eingeführt wird und die Öffnung (12) mit dem mindestens einen Blechbauteil, aus dem das Außenrohr (9) gefertigt ist, durch ein gepulstes Schweißverfahren verschweißt wird.

2. Verfahren nach Anspruch 1, bei dem die Verbindung mit einer gepulsten Schweißstromquelle bereitgestellt wird.

3. Verfahren nach einem der Ansprüche 1 oder 2, bei dem ein Laserschweißverfahren angewandt wird.

4. Verfahren nach einem der Ansprüche 1 oder 2, bei dem ein WIG-Schweißverfahren angewandt wird.

5. Verfahren nach einem der Ansprüche 1 oder 2, bei dem ein MAG-Schweißverfahren angewandt wird.

6. Verfahren nach einem der vorstehenden Ansprüche, bei dem zumindest zu verschweißende Bereiche des mindestens einen Blechbauteils (9) und der Öffnung (12) des Abgasaggregats (5) vor dem Verschweißen auf eine Bearbeitungstemperatur temperiert werden.

7. Verfahren nach einem der vorstehenden Ansprüche, bei dem zumindest zu verschweißende Bereiche des mindestens einen Blechbauteils (9) und der Öffnung (12) des Abgasaggregats (5) nach dem Verschweißen gezielt abgekühlt werden.

8. Verbindung, die einen Abgaskrümmer (3), der ein Innenrohr (7) und ein Aussenrohr (9) aufweist, und ein Abgasaggregat (5) mit einem eine Öffnung (12) aufweisenden Gehäuse (13) enthält, wobei das Aussenrohr (9) aus mindestens einem Blechbauteil und zumindest die Öffnung (12) des Abgasaggregats (5) aus Gussmetall gefertigt ist, das Innenrohr (7) in die Öffnung (12) des Abgasaggregats (5) eingeführt ist und wobei das mindestens eine Blechbauteil des Aussenrohrs (9) und die Öffnung (12) eine durch ein gepulstes Schweissverfahren hergestellte Schweissverbindung aufweisen.

9. Verbindung nach Anspruch 8, bei der das Innenrohr (7) als Gasführungsrohr (7) eines luftspaltisolierten Abgaskrümmers (3) ausgebildet ist.

10. Verbindung Anspruch 8 oder 9, bei der die Öffnung (12) als Zugaskanal (12) des Abgasaggregats (5) ausgebildet ist.

11. Verbindung nach Anspruch 10, bei der das Abgasaggregat (5) als Turbolader (5) ausgebildet ist.

## Claims

1. Method for connecting an exhaust manifold (3) to a port (12) of a housing (13) of an exhaust assembly (5), the exhaust manifold having an inner pipe (7) and an outer pipe (9) which is manufactured from at least one sheet metal component, and at least the port (12) of the exhaust assembly (5) being manufactured from cast metal, and the inner pipe (7) being introduced into the port (12) of the housing (13) of the exhaust assembly (5) and the port (12) being welded by means of a pulse-welding method to the at least one sheet metal component from which the outer pipe (9) is manufactured.

2. Method according to Claim 1, in which the connection is provided by means of a pulsed welding current source.

3. Method according to one of Claims 1 or 2, in which a laser welding method is employed.

4. Method according to one of Claims 1 or 2, in which a TIG welding method is employed.

5. Method according to one of Claims 1 or 2, in which an MAG welding method is employed.

6. Method according to one of the preceding claims, in which at least those regions of the at least one sheet metal component (9) and of the port (12) of the exhaust assembly (5) which are to be welded together are thermally controlled to a processing temperature before welding.

7. Method according to one of the preceding claims, in which at least those regions of the at least one sheet metal component (9) and of the port (12) of the exhaust assembly (5) which are to be welded together are cooled in a controlled manner after welding.

8. Connection, which contains an exhaust manifold (3), which has an inner pipe (7) and an outer pipe (9), and an exhaust assembly (5) with a housing (13) having a port (12), the outer pipe (9) being manufactured from at least one sheet metal component and at least the port (12) of the exhaust assembly (5) being manufactured from cast metal, the inner pipe (7) being introduced into the port (12) of the exhaust assembly (5), and the at least one sheet metal component of the outer pipe (9) and the port (12) having a welded joint produced by means of a pulse-welding method.

9. Connection according to Claim 8, in which the inner pipe (7) is designed as a gas-carrying pipe (7) of an airgap-insulated exhaust manifold (3).

10. Connection according to Claim 8 or 9, in which the port (12) is designed as an inflow gas duct (12) of the exhaust assembly (5).

11. Connection according to Claim 10, in which the exhaust assembly (5) is designed as a turbocharger (5).

## Revendications

1. Procédé pour l'assemblage d'un collecteur de gaz d'échappement (3) à une ouverture (12) d'un corps (13) d'une unité de gaz d'échappement (5), dans lequel le collecteur de gaz d'échappement comprend un tube intérieur (7) et un tube extérieur (9), qui est fabriqué en au moins un composant de tôle, et au moins l'ouverture (12) de l'unité de gaz d'échappement (5) est fabriquée en métal moulé, et dans lequel le tube intérieur (7) est introduit dans l'ouverture (12) du corps (13) de l'unité de gaz d'échappement (5) et l'ouverture (12) est soudée audit au moins un composant de tôle, dont le tube extérieur (9) est constitué, par un procédé de soudage pulsé.

2. Procédé selon la revendication 1, dans lequel l'assemblage est réalisé avec une source de courant de soudage pulsée.

3. Procédé selon l'une quelconque des revendications 1 ou 2, dans lequel on utilise un procédé de soudage au laser.

4. Procédé selon l'une quelconque des revendications 1 ou 2, dans lequel on utilise un procédé de soudage WIG.

5. Procédé selon l'une quelconque des revendications 1 ou 2, dans lequel on utilise un procédé de soudage MAG.

6. Procédé selon l'une quelconque des revendications précédentes, dans lequel au moins des zones à souder de l'au moins composant de tôle (9) et de l'ouverture (12) de l'unité de gaz d'échappement (5) sont préchauffées à une température de traitement avant le soudage.

7. Procédé selon l'une quelconque des revendications précédentes, dans lequel au moins des zones à souder de l'au moins un composant de tôle (9) et de l'ouverture (12) de l'unité de gaz d'échappement (5) sont refroidies de façon ciblée après le soudage.

8. Assemblage, qui comprend un collecteur de gaz d'échappement (3), qui comporte un tube intérieur (7) et un tube extérieur (9), et une unité de gaz d'échappement (5) avec un corps (13) présentant une ouverture (12), dans lequel le tube extérieur (9) est fabriqué en au moins un composant de tôle et l'ouverture (12) de l'unité de gaz d'échappement (5) est fabriquée en métal moulé, le tube intérieur (7) est introduit dans l'ouverture (12) de l'unité de gaz d'échappement (5) et dans lequel l'au moins un composant de tôle du tube extérieur (9) et l'ouverture (12) présentent un assemblage soudé réalisé par un procédé de soudage pulsé.

9. Assemblage selon la revendication 8, dans lequel le tube intérieur (7) est un tube de guidage de gaz (7) d'un collecteur de gaz d'échappement (3) isolé par une gaine d'air.

10. Assemblage selon la revendication 8 ou 9, dans lequel l'ouverture (12) est formée par un canal d'entrée de gaz (12) de l'unité de gaz d'échappement (5).

11. Assemblage selon la revendication 10, dans lequel l'unité de gaz d'échappement (5) est formée par un turbocompresseur de suralimentation (5).
